# EUROPEAN PATENT APPLICATION

(11) **EP 4 763 407 A1**
(43) Date of publication of application: **24.06.2026**
(21) Application number: 24907841.1
(22) Date of filing: 26.11.2024
(51) Int. Cl.: B23K 31/12, B23K 11/25, B23K 20/10, B23K 35/02, B23K 101/36

(54) **METHOD AND APPARATUS FOR INSPECTING WELDING ROD, AND METHOD FOR MANUFACTURING SECONDARY BATTERY COMPRISING SAME**

(30) Priority: 20.12.2023 KR 20230187682; 15.11.2024 KR 20240163235
(71) Applicant: LG Energy Solution, Ltd., Seoul 07335 (KR)
(72) Inventor: PARK, Jung Hyun, Daejeon 34122 (KR); KIM, Sung Ryul, Daejeon 34122 (KR); BAE, Min Gu, Daejeon 34122 (KR); KIM, Kyoung Hak, Daejeon 34122 (KR); LIM, Sung Sang, Daejeon 34122 (KR); JUNG, Yo Han, Daejeon 34122 (KR)
(74) Representative: Goddar, Heinz J.
(86) International application number: PCT/KR2024/018865
(87) International publication number: WO 2025/135556

(57) **Abstract**

The present invention relates to an apparatus and method for inspecting a welding rod and a method for manufacturing a secondary battery including the same, and more particularly, to an apparatus and method for inspecting a welding rod, in which a damage stature of the welding rod used in a process of manufacturing a secondary battery is early confirmed to continuously produce the secondary battery without quality defects, an existing qualitative evaluation method is changed to a quantitative method to remove human errors, thereby improving a management level, and an equipment downtime is reduced to increase in production and reduce quality costs, and a method for manufacturing a secondary battery including the same.

## Description

### TECHNICAL FIELD

### CROSS-REFERENCE TO RELATED APPLICATION

The present application claims the benefit of the priority of Korean Patent Application Nos. 10-2023-0187682, filed on December 20, 2023, and 10-2024-0163235, filed on November 15, 2024, which are hereby incorporated by reference in their entirety.

### TECHNICAL FIELD

The present invention relates to an apparatus and method for inspecting a welding rod and a method for manufacturing a secondary battery including the same, and more particularly, to an apparatus and method for inspecting a welding rod, in which a damage stature of the welding rod used in a process of manufacturing a secondary battery is early confirmed to continuously produce the secondary battery without quality defects, an existing qualitative evaluation method is changed to a quantitative method to remove human errors, thereby improving a management level, and an equipment downtime is reduced to increase in production and reduce quality costs, and a method for manufacturing a secondary battery including the same.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Particularly, in terms of materials, there is a high demand for lithium secondary batteries such as lithium ion batteries and lithium ion polymer batteries that have advantages such as high energy density, a discharge voltage, and output stability.

Secondary batteries may be classified into cylindrical and prismatic batteries, in which an electrode assembly is built in a cylindrical or prismatic metal can, and pouch-type batteries, in which an electrode assembly is built in a pouch-type case made of an aluminum laminate sheet, depending on the shapes of the battery cases.

In an assembly process of the cylindrical secondary battery according to the related art, when a bottom part of a can and an electrode connector (electrode tab, etc.) are connected to each other, resistance welding and ultrasonic welding are applied. In the resistance welding and the ultrasonic welding, the welding is performed through energy transmitted through physical contact, and thus, quality of a contact surface is important. As the contact surface is widened, an energy density decreases, resulting in insufficient welding energy transfer per unit area, thereby causing weak welding. When the contact surface is worn or misaligned, the energy density becomes too concentrated to one side to causes overwelding.

In the related art, management for confirming the contact surface and pressure of a resistance welding rod or an ultrasonic welding tool used in the welding is conducted only through the qualitative evaluation confirmed with the naked eye, and there is a lack of standards for the quality evaluation. Thus, a method for quantitatively evaluating and inspecting the contact surface between the resistance welding rod and the ultrasonic welding tool is required.

Particularly, the conventional qualitative quality evaluation was subject to errors between engineers or human errors, and there was a problem that the inspection is not conducted efficiently because the confirmation is impossible while the welding equipment is in operation.

### DISCLOSURE OF THE INVENTION

### TECHNICAL PROBLEM

The present invention has been devised to solve the above problems, and an object of the present invention is to provide an apparatus and method for inspecting a welding rod, in which a damage stature of the welding rod used in a process of manufacturing a secondary battery is early confirmed to continuously produce the secondary battery without quality defects, an existing qualitative evaluation method is changed to a quantitative method to remove human errors, thereby improving a management level, and an equipment downtime is reduced to increase in production and reduce quality costs, and a method for manufacturing a secondary battery including the same.

### TECHNICAL SOLUTION

A method for inspecting a welding rod relates to a method for inspecting a welding rod used in a welding process of a can for a secondary battery, which includes: an initial standby process in which the welding rod is in standby state before the can for the secondary battery is input for welding; a standby process before the welding, in which the can is input, and the welding rod is in the standby state; a welding process of pressing the can and an electrode tab that is an object to be welded to the can using the welding rod to perform the welding; a standby process after the welding, in which the welding rod returns to the standby state again after the welding process; and a transfer process in which the can moves to the next process, and the method includes: an electronic pressure-sensitive paper input process of inputting an electronic pressure-sensitive paper instead of the can in the standby process before the welding; a pressing process in which the welding rod presses the electronic pressure-sensitive paper inserted instead of the can and the electrode tab in the welding process; an inspection process of inspecting at least one of a pressure or a surface state of the welding rod through the pressing of the electronic pressure-sensitive paper; and a collection process of collecting the electronic pressure-sensitive paper in the transfer process.

The welding process of the can for the secondary battery may be performed by rotary welding equipment that rotates in a circular manner, and the electronic pressure-sensitive paper may perform a necessary process while moving in a curved shape along a curved guide rail.

Based on an angle measurement reference point of the rotary welding equipment, the standby process before the welding may be performed at a position of 90 degrees (3 o'clock position), the welding process may be performed at a position of 180 degrees (6 o'clock position), and the transfer step may be performed at a position of 270 degrees (9 o'clock position), wherein the electronic pressure-sensitive paper input process may be performed at the position of 90 degrees, the pressing process is performed at the position of 180 degrees, and the collection process may be performed at the position of 270 degrees.

The electronic pressure-sensitive paper may move along the curved guide rail to the position of 90 degrees (3 o'clock position), the position of 180 degrees (6 o'clock position), and the position of 270 degrees (9 o'clock position).

The welding rod may include an upper welding rod and a lower welding rod, wherein, in the pressing process, the electronic pressure-sensitive paper may be pressed from upper and lower sides by the upper welding rod and the lower welding rod.

The welding may be resistance welding or ultrasonic welding.

The electronic pressure-sensitive paper may include a plurality of measurement nodes.

Each of the measurement nodes may have a width of 0.01 mm to 0.1 mm.

A pitch between the measurement nodes may have a value of 0.01 mm to 0.2 mm.

The inspection process may include: a measurement process of measuring a surface pressure state of the electronic pressure-sensitive paper; an area setting process of setting a pressure measurement range within measured pressure distribution; a pressure calculation process of calculating a pressure value by adding pressures of the plurality of measurement nodes within a set area; and a determination process of determining whether the pressure value calculated within the set area satisfies a set reference pressure to determine whether it is acceptable or not based on the result.

The inspection process may include: a measurement process of measuring a surface pressure state of the electronic pressure-sensitive paper; an area setting process of setting a pressure measurement range within measured pressure distribution; a pressed-shape analysis process of analyzing a pressed shape formed by the electronic pressure-sensitive paper within the range; and a determination process of determining whether the pressed shape satisfies a reference pressed-shape to determining whether it is acceptable or not based on the result.

The inspection process may include: a measurement process of measuring a surface pressure state of the electronic pressure-sensitive paper; an area setting process of setting a pressure measurement range within measured pressure distribution; a pressure calculation process of calculating a pressure value by adding pressures of the plurality of measurement nodes within a set area; a pressed-shape analysis process of analyzing a pressed shape formed by the electronic pressure-sensitive paper; and a determination process of determining whether the pressure value calculated within the set area satisfies a set reference pressure and whether the pressed shape satisfies the reference pressed-shape to determine whether it is acceptable or not based on the results.

The method may further include an equipment alarm process of transmitting pass/fail determination data determined in the determination process to the equipment to determine whether to stop or start the equipment.

The method may further include, before the pressing process, a pre-pressing process in which the welding rod presses the electronic pressure-sensitive paper at lower pressing force than a pressure for the welding in the welding process, wherein, in the pressing process, the welding rod may press the electronic pressure-sensitive paper at the pressure for the welding in the welding process.

An apparatus for inspecting a welding rod relates to an apparatus for inspecting a welding rod used in a welding process of a can for a secondary battery, which includes: an initial standby process in which the welding rod is in standby state before the can for the secondary battery is input for welding; a welding process of pressing the can and an electrode tab that is an object to be welded to the can using the welding rod to perform the welding; a standby process before the welding, in which the can is input, and the welding rod is in the standby state; a standby state process after the welding, in which the welding rod returns to the standby state again after the welding process; and a transfer process in which the can moves to the next process, and the apparatus includes: an electronic pressure-sensitive paper configured to inspect the welding rod by receiving a pressure applied to the welding rod; a bracket on which the electronic pressure-sensitive paper is fixedly installed; and a curved guide rail configured to guide the bracket on which the electronic pressure-sensitive paper is installed to move in a curved shape.

The welding process of the can for the secondary battery may be performed by rotary welding equipment that rotates in a circular shape, wherein, based on an angle measurement reference point of the rotary welding equipment, the bracket may move along the curved guide rail to positions of 90 degrees, 180 degrees, and 270 degrees.

The bracket may include: a bracket body into which the electronic pressure-sensitive paper is inserted; and a fixing member coupled to the bracket body to fix and install the electronic pressure-sensitive paper.

A stopper may be installed on the guide rail to restrict the movement of the bracket.

A method for manufacturing a secondary battery includes: a welding process of a can for a secondary battery, the welding process including:

an initial standby process in which the welding rod is in standby state before the can for the secondary battery is input for welding; a standby process before the welding, in which the can is input, and the welding rod is in the standby state; a welding process of pressing the can and an electrode tab that is an object to be welded to the can using the welding rod to perform the welding; a standby state process after the welding, in which the welding rod returns to the standby state again after the welding process; and a transfer process in which the can moves to the next process; and the method for inspecting the welding rod of claim 1, which inspects the welding rod used in the welding process of the can for the secondary battery, wherein the method for inspecting the welding rod is performed once whenever the welding process of the can for the secondary battery is performed n times. (where n is a natural number greater than or equal to 2)

### ADVANTAGEOUS EFFECTS

In the apparatus and method for inspecting the welding rod and the method for manufacturing the secondary battery including the same according to the present invention, the damage stature of the welding rod used in the process of manufacturing the secondary battery may be early confirmed to continuously produce the secondary battery without the quality defects, the existing qualitative evaluation method may be changed to the quantitative method to remove the human errors, thereby improving the management level, and the equipment downtime may be reduced to increase in production and reduce the quality costs.

### BRIEF DESCRIPTION OF THE DRAWINGS

FIG. 1 is a perspective view of a rotary welding equipment and a welding rod inspection device used in a method for inspecting a welding rod according to an embodiment of the present invention.
FIG. 2 is a perspective view of an apparatus for inspecting the welding rod according to an embodiment of the present invention.
FIG. 3 is a perspective view of an electronic pressure-sensitive paper and a bracket in the apparatus for inspecting the welding rod according to an embodiment of the present invention.
FIG. 4 is a view illustrating a state of the welding rod measured by the electronic pressure-sensitive paper in the apparatus for inspecting the welding rod according to an embodiment of the present invention, wherein (a) of FIG. 4 is a view illustrating a normal state (no wear), and (b) is a view illustrating an abnormal state (with wear).
FIG. 5 is a diagram illustrating each process in a method for inspecting a welding rod according to an embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1 - Method for inspecting welding rod

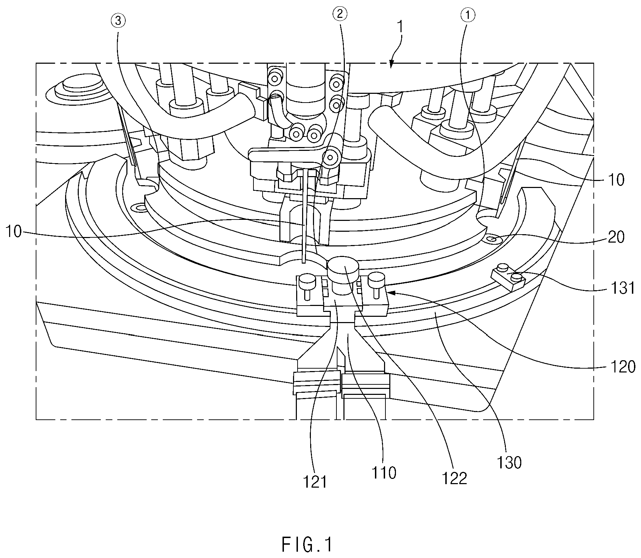

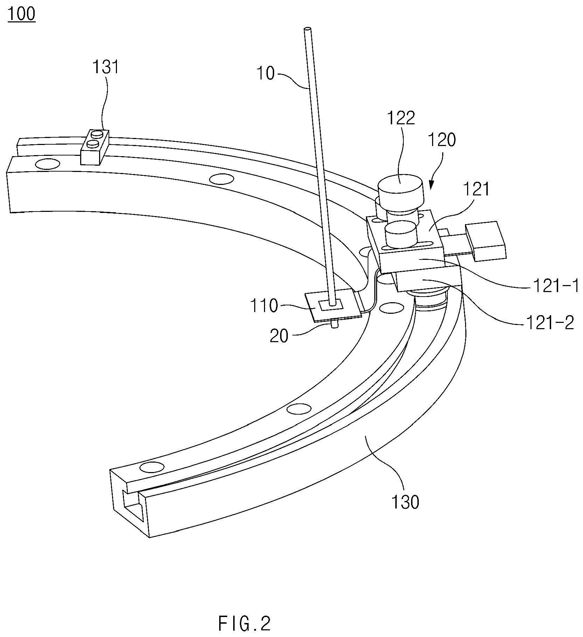

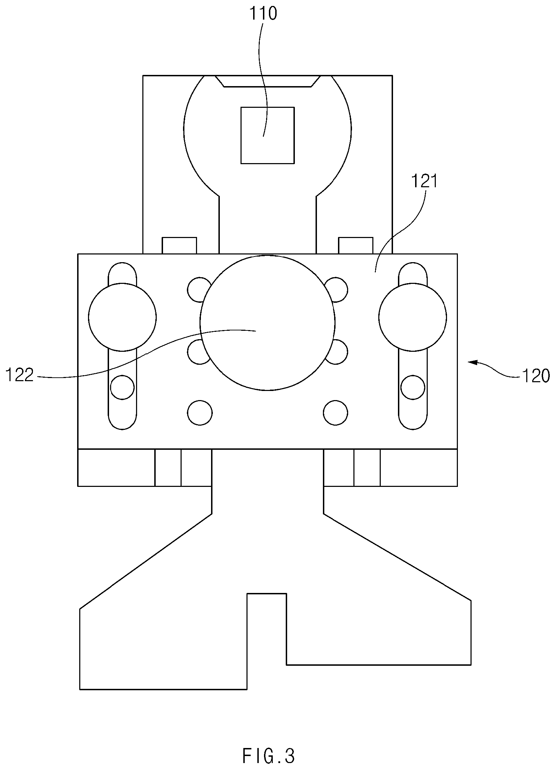

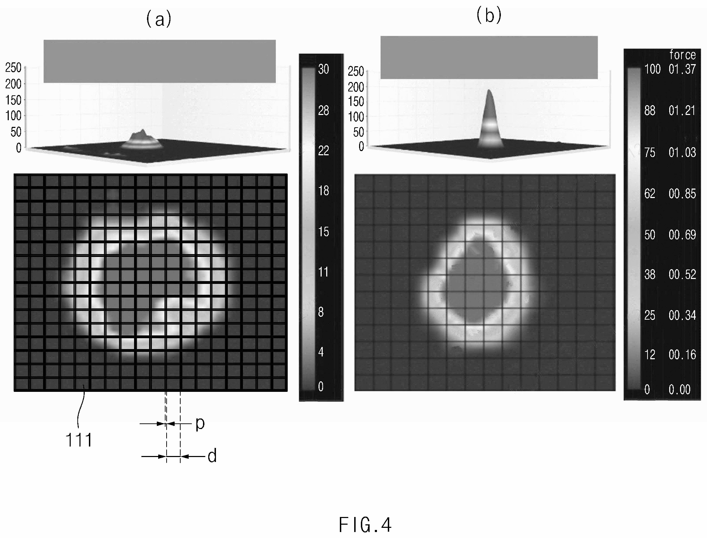

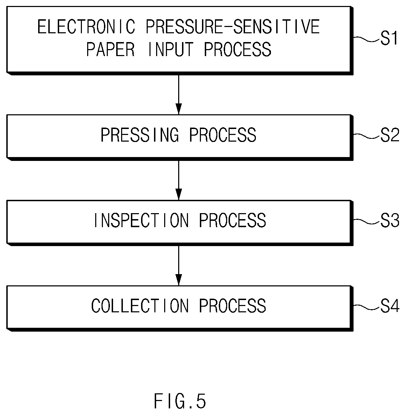

FIG. 1 is a perspective view of a rotary welding equipment and a welding rod inspection device used in a method for inspecting a welding rod according to an embodiment of the present invention. FIG. 2 is a perspective view of an apparatus for inspecting the welding rod according to an embodiment of the present invention. FIG. 3 is a perspective view of an electronic pressure-sensitive paper and a bracket in the apparatus for inspecting the welding rod according to an embodiment of the present invention. FIG. 4 is a view illustrating a state of the welding rod measured by the electronic pressure-sensitive paper in the apparatus for inspecting the welding rod according to an embodiment of the present invention, wherein (a) of FIG. 4 is a view illustrating a normal state (no wear), and (b) is a view illustrating an abnormal state (with wear). FIG. 5 is a diagram illustrating each process in a method for inspecting a welding rod according to an embodiment of the present invention.

Referring to FIGS. 1 to 3, a method for inspecting welding rods 10 and 20 according to Embodiment 1 of the present invention relates to a method for inspecting welding rods 10 and 20, which inspects the welding rods 10 and 20 used in a welding process of a can (not shown) for a secondary battery. Here, the welding process may be, for example, resistance welding or ultrasonic welding.

In order to explain the method for inspecting the welding rods 10 and 20 according to Embodiment 1 of the present invention, the welding process of the can for the secondary battery is first described with reference to FIG. 1. FIG. 1 illustrates equipment for welding the secondary battery. The welding equipment may be a device that welds the can for the secondary battery to an electrode tab connected to an electrode assembly inserted into the can for the secondary battery. The welding process may be performed by the rotary welding equipment 1 that rotates circularly.

The welding process of the can for the secondary battery may include an initial standby process, a standby process before the welding, a welding process, a standby process after the welding, and a transfer process. The method for inspecting the welding rods 10 and 20 of the present invention may be a method for inspecting the welding rods 10 and 20 used in the welding process of the can for the secondary battery, which includes the above-described processes for the welding.

First, the welding process of the can for the secondary battery will be described. The initial standby process may be a process in which the welding rods 10 and 20 are in a standby state before the can for the secondary battery is input for the welding. The welding rods 10 and 20 may include an upper welding rod 10 and a lower welding rod 20. The welding in the subsequent welding process may be performed by allowing the upper welding rod 10 and the lower welding rod 20 to approach an object to be welded from upper and lower sides. That is, the upper welding rod 10 may descend downward from the upper side to perform the welding, and the lower welding rod 20 may ascend upward from the lower side to perform the welding. For this, in the initial standby process, the upper welding rod 10 may be in a standby state at the upper side, and the lower welding rod 20 may be in a standby state at the lower side.

The standby state before the welding may be a process in which the can is input, and the welding rods 10 and 20 are in a standby state. That is, the standby state before the welding may be a process in which the can is input to a welding position in the state in which the welding rods 10 and 20 stand by in the same state as the initial standby process. In this process, the upper welding rod 10 may still stand by at the upper side of the can, and the lower welding rod 20 may still stand by at the lower side of the can.

Referring to FIG. 1, the rotary welding equipment 1 for the welding is provided in a circular shape, and thus, a reference point may be set in the circular rotary welding equipment 1. For example, in the rotary welding equipment illustrated in FIG. 1, the reference point for angle measurement may be an invisible rear portion of the equipment. The reference point may be defined as a point at which an angle is 0 degree. In addition, the angle may be determined in a clockwise direction. When determined in the above-described manner, a portion shown at a right side of the equipment in FIG. 1 may be a position ① at 90 degrees. For convenience, the portion may be called a 3 o'clock position ①. In addition, a portion shown in front of the equipment may be a position (2) at 180 degrees. For convenience, the portion may be called a 6 o'clock position ②. The portion shown at a right side of the equipment may be a position ③ at 270 degrees. For convenience, the portion may be called a 9 o'clock position ③.

Based on the reference, that is, based on an angle measurement reference point of the rotary welding equipment 1, the previously described standby process before the welding may be performed at the position at 90 degree (= 3 o'clock position ①). At the 3 o'clock position ①, the can (not shown) may be input to the welding position between the upper welding rod 10 and the lower welding rod 20.

The welding process may be a process in which the welding rods 10 and 20 press the can and the electrode tab that is an object to be welded to the can (hereinafter, referred to as a welding object) to perform the welding. Here, the electrode tab may be an electrode connector that is connected to an electrode of the electrode assembly inserted into the can. The electrode connector may be considered as an electrode tab in the present invention, regardless of its name. In addition, based on the angle measurement reference point of the rotary welding equipment 1 described above, the welding process may be performed at a position of 180 degrees (= 6 o'clock position) ②. That is, when the welding rods 10 and 20 that are in the standby process before the 3 o'clock welding rotates about 90 degrees to move to a position of 180 degrees (= 6 o'clock position) ②, the can may also rotate together with the welding rod to move to a position of 180 degrees (= 6 o'clock position) ②. In addition, the welding may be performed at the 6 o'clock position.

In the welding process, the upper welding rod 10 may descend from an upper side of the welding object (e.g., an object at which the can and the electrode tab overlap each other) toward the welding object to press the upper side of the welding object, thereby performing the welding. In addition, the lower welding rod 20 may ascend from the lower side of the welding object toward the welding object to press the lower side of the welding object, thereby performing the welding.

The standby process after the welding may be a process in which the welding rods 10 and 20 returns to the standby state again after the welding process. The upper welding rod 10 may ascend again to the upper side of the welding object (e.g., can), and the lower welding rod 20 may descend again to the lower side of the welding object.

The transfer process may be a process in which the welded can moves to the next process. The transfer process may be performed at a position of 270 degrees (9 o'clock position) ③. In the transfer process, the can may be disposed outward from the welding position between the upper welding rod 10 and the lower welding rod 20. In FIG. 1, the outward direction may be a direction toward the left in the rotary welding equipment 1.

In the method for inspecting the welding rods 10 and 20 according to Embodiment 1 of the present invention may be a method for inspecting the welding rods 10 and 20 used in the welding process of the can for the secondary battery, which includes the initial standby process, the standby process after the welding, the welding process, the standby process after the welding, and the transfer process and may include an electronic pressure-sensitive paper input process (S1), a pressing process (S2), an inspection process (S3), and a collection process (S4) (see FIG. 5). The method for inspecting the welding rods 10 and 20 according to Embodiment 1 of the present invention may have a differentiated feature in that an electronic pressure-sensitive paper 110 is input to a position at which the can for the secondary battery is input in the welding process, and the electronic pressure-sensitive paper 110 performs inspection of the welding rods 10 and 20 while following the process in which the can for the secondary battery is welded.

First, in order to perform the method for inspecting the welding rods 10 and 20 according to Embodiment 1 of the present invention, appropriate inspection equipment may be required. The apparatus 100 for inspecting the welding rod is briefly described below with reference to FIGS. 2 and 3.

The apparatus 100 for inspecting the welding rod may largely include an electronic pressure-sensitive paper 110, a bracket 120, and a guide rail 130. The electronic pressure-sensitive paper 110 may be configured to inspect the welding rods 10 and 20 by receiving a pressure from each of the welding rods 10 and 20. The bracket 120 may be configured to fix and install the electronic pressure-sensitive paper 110. In addition, the guide rail 130 may be configured to guide the bracket 120 on which the electronic pressure-sensitive paper 110 is installed to move in a curved shape. The electronic pressure plate 110 may perform a necessary process while moving in the curved shape along the curved guide rail 130.

The electronic pressure-sensitive paper 110 may include a plurality of measurement nodes 111. Each of the measurement nodes 111 may be a minimum unit configuration that performs measurement as illustrated in FIG. 4. The plurality of measurement nodes 111 may be provided in a grid shape to perform the measurement. The measured values by the respective measurement nodes 111 may be combined to obtain an entire result value.

For this, a width d of each measurement node 111 may have a value of 0.01 mm to 0.1 mm. In addition, a pitch p between the measurement node 111 and the measurement node 111 may have a value of 0.01 mm to 0.2 mm. Here, the pitch p between the measurement node 111 and the measurement node 111 may mean a gap between the measurement node 111 and the measurement node 111. The smaller the width d and pitch p of the measurement node 111, the more precise the inspection results may be obtained.

In addition, the bracket 120 may include a bracket body 121 and a fixing member 122. Here, the bracket body 121 may be configured to insert the electronic pressure-sensitive paper 110 therein. The bracket 120 may include an upper block 121-1 and a lower block 121-2, and the electronic pressure-sensitive paper 110 may be inserted and installed between the upper block 121-1 and the lower block 121-2.

In addition, the fixing member 122 may be coupled to the bracket body 121 to fix and install the electronic pressure-sensitive paper 110. The fixing member 122 may pass through the upper block 121-1 to press the electronic pressure plate 110 and may be fixedly installed so as not to move forward or backward. For example, the fixing member 122 may be a screw member.

The guide rail 130 may guide the bracket 120 to move in a curved shape, more specifically, to move in a circular shape. Thus, the bracket 120 may move along the guide rail 130 to a position of 90 degrees (=3 o'clock position) ①, a position of 180 degrees (=6 o'clock position) ②, and a position of 270 degrees (=9 o'clock position) ③ based on the angle measurement reference point of the rotary welding equipment 1.

In addition, a stopper 131 for restricting movement of the bracket 120 may be installed on the guide rail 130. A position at which the bracket 120 is stopped by this stopper 131 may be an original point of the rotational movement of the bracket 120.

The method for inspecting the welding rods 10 and 20 according to Embodiment 1 of the present invention may be performed using the apparatus 100 for inspecting the welding rods.

Referring to FIG. 5, the method for inspecting the welding rods 10 and 20 according to Embodiment 1 of the present invention includes an electronic pressure-sensitive paper input process (S1), a pressing process (S2), an inspection process (S3), and a collection process (S4). In addition, the electronic pressure plate 110 may perform a necessary process while moving in the curved shape along the curved guide rail 130.

In the method for inspecting the welding rods 10 and 20 according to Embodiment 1 of the present invention, first, the electronic pressure-sensitive paper input process (S1) may be a process of inputting the electronic pressure-sensitive paper 110 instead of the can in the standby process before the welding. The electronic pressure-sensitive paper input process (S1) may be performed at a position of 90 degrees (=3 o'clock position) ① based on the angle measurement reference point of the rotary welding equipment 1. In the electronic pressure-sensitive paper input process (S1) corresponding to the standby process before the welding, the upper welding rod 10 may be in a state of standing by at an upper side of the electronic pressure-sensitive paper 110, and the lower welding rod 20 may be in a state of standing by at a lower side of the electronic pressure-sensitive paper 110.

The pressing process (S2) may be a process in which the welding rods 10 and 20 presses the electronic pressure-sensitive paper 110 (input instead of the can and the electrode tab) in the welding process. The pressing process (S2) may be performed at a position of 180 degrees (=6 o'clock position) ②. In the pressing process (S2), the electronic pressure-sensitive paper 110 may be pressed from the upper and lower sides by the upper welding rod 10 and the lower welding rod 20. When the process of moving from the electronic pressure-sensitive paper input process (S1) to the pressing process (S2) progresses, the electronic pressure-sensitive paper 110 may move from a position of 90 degrees (3 o'clock position) to a position of 180 degrees (6 o'clock position) along the curved guide rail 130.

In addition, the inspection process (S3) may be a process of inspecting at least one of a pressure or a surface state of each of the welding rods 10 and 20 by pressing the electronic pressure-sensitive paper 110. Here, the pressure inspection may refer to inspection whether a pressure applied by each of the welding rods 10 and 20 to weld the can is appropriate. Thus, if the welding rod presses the electronic pressure-sensitive paper 110 with the same pressure as the can, it is easy to determine whether a level of the pressure during the welding of the welding rods 10 and 20 is within a normal range.

In addition, the inspection of the surface state of each of the welding rods 10 and 20 may mean inspection of a degree of wear on the surface. For example, the inspection of the surface state may be inspection of a degree of horizontality of each of the welding rods 10 and 20. The state of the surface may be inspected by measuring a state in advance in an initial normal state before using the welding rods 10 and 20 and then comparing the horizontality using the initial normal state as a reference value. When the welding rods 10 and 20 in the normal state that is not worn presses the electronic pressure-sensitive paper 110 to a set pressure, a shape detected by the electronic pressure-sensitive paper 110 may be set as a reference shape. In addition, when each of the used welding rods 10 and 20 to be inspected is pressed with the electronic pressure-sensitive paper 110 at the set pressure, the detected shape may be measured to compare whether it is the same as or different from the reference shape, and if it is different, a degree of difference may be determined so that the surface state (degree of horizontality) of each of the welding rods 10 and 20 to be inspected is determined to be good or bad.

Here, the inspection process (S3) may specifically include a measurement process, an area setting process, a pressure calculation process, a pressed-shape analysis process, and a determination process.

The measurement process may be a process of measuring a surface pressure state of the electronic pressure-sensitive paper 110. FIG. 4 illustrates a screen on which results of measuring the welding rods 10 and 20, which are the objects to be inspected, by the electronic pressure-sensitive paper 110 are displayed on a monitor or the like. As illustrated in FIG. 4, when the welding rods 10 and 20 press the electronic pressure-sensitive paper 110 at the set pressure (pressure applied when the welding rod welds the can), the measurement results may appear as in FIG. 4. The electronic pressure-sensitive paper 110 includes a plurality of measurement nodes 111, and in FIG. 4, the measurement values may be displayed in a state in which squares corresponding to the plurality of measurement nodes 111 are arranged in a grid shape.

The area setting process may be to set a pressure measurement range within a measured pressure distribution. For example, it may be to determine which range (area) of the multiple squares corresponding to the measurement nodes 111 illustrated in FIG. 4 will be set as an object to be analyzed (hereinafter, referred to as an analysis object). For example, in FIG. 4, the squares including differently colored portions may be set as the range of the analysis object.

The pressure calculation process may be a process of calculating the pressure value by adding the pressures of the plurality of measurement nodes 111 within the set area. That is, there will be a separate pressure measured by each measurement node 111, and the pressure values may be added to obtain a pressure applied by each of the welding rods.

The pressed-shape analysis process may be a process of analyzing the pressed shape formed by the electronic pressure-sensitive paper 110. That is, as described above, when the welding rod in the normal state that is not worn presses the electronic pressure-sensitive paper 110 at the set pressure, the shape detected by the electronic pressure-sensitive paper 110 may be set as a reference pressed-shape. In addition, when the welding rod, which is the object to be inspected, presses the electronic pressure-sensitive paper 110 at the set pressure, the detected shape may be measured to obtain the pressed-shape. In addition, whether the pressed-shape and the reference pressed-shape are the same or different may be compared and analyzed, and if so, how different the pressed-shape and the reference pressed-shape are.

In addition, the determination process may be a process of determining whether the pressure value calculated within the set area satisfies the set reference pressure and whether the pressed-shape satisfies the reference pressed-shape to determine pass or fail based on the result.

In the inspection process (S3) described above, both the pressure calculation process and the pressed-shape analysis process may be performed, and the result may be determined to be good if both results are good. However, the present invention is not limited thereto.

That is, it may be applied in a manner that determines whether the product is good or bad by performing only one of the pressure calculation process and the pressed-shape analysis process. That is, the present invention may be applied in a manner in which only the pressure calculation process is performed after the area setting process, and in the determination process, it is determined whether the pressure value calculated within the set area satisfies the set reference pressure, and then the pass/fail is determined, and the process is ended based on the results.

In addition, the present invention may also be applied in a manner in which only the pressed-shape analysis process is performed after the area setting process, and in the determination process, it is determined whether the pressed-shape satisfies the reference pressure shape, and then, the pass/fail is determined, and the process is ended based on the results.

The present invention may have the feature of enabling continuous production without quality defects by early inspecting the damage state of each of the welding rods 10 and 20 used in the process of manufacturing the secondary battery by utilizing the existing welding process as it is using the electronic pressure-sensitive paper 110 to inspect the welding rods 10 and 20, and enabling the existing qualitative evaluation method to be changed to a quantitative method to eliminate human error, thereby improving the management level. In addition, since the inspection is performed while the welding process is in progress, the production may increase by reducing equipment downtime, and quality costs may be reduced by improving quality.

The collection process (S4) may be performed after performing the inspection process (S3). The collection process (S4) may be performed in the transfer process in which the can is transferred to the next process and may be a process in which the electronic pressure-sensitive paper 110 is collected instead of the can. Referring to FIG. 1, the collection process (S4) may be performed at a position of 270 degrees (9 o'clock position) ③ based on the angle measurement reference point of the rotary welding equipment 1. The electronic pressure-sensitive paper 110 may move to a position of 270 degrees (9 o'clock position) along the guide rail 130 and then move to a different angle position again after the collection process (S4).

The method for inspecting the welding rods 10 and 20 according to Embodiment 1 of the present invention may further include an equipment alarm process for transmitting pass/fail determination data determined in the determination process to the equipment to determine whether to stop or start the equipment. If it is determined to be good, the welding will proceed, but if it is determined to be defective, the equipment may be stopped. Alternatively, the welding process may be carried out again after stopping the equipment and replacing the welding rods 10 and 20.

In addition, in the welding rods 10 and 20 inspection method of the present invention, as another embodiment, before the pressing process (S2), a pre-pressing process in which the welding rods 10 and 20 press the electronic pressure-sensitive paper 110 at a lower pressure than the pressure for welding in the welding process may be further performed. In the pre-pressing process, the welding rods 10 and 20 may press the electronic pressure-sensitive paper 110 at a pressure lower than the pressure, and then, in the subsequent pressing process (S2), the welding rods 10 and 20 may press the electronic pressure-sensitive paper 110 at the main pressure (i.e., pressing force for welding in the welding process). When performed in this manner, it is possible to prevent a temporary large shock from being applied to the electronic pressure-sensitive paper 110 by applying the main pressure at once.

### Embodiment 2 - Apparatus for inspecting welding rod

FIG. 2 is a perspective view of an apparatus 100 for inspecting the welding rod according to an embodiment of the present invention. FIG. 3 is a perspective view of an electronic pressure-sensitive paper 110 and a bracket 120 in the apparatus 100 for inspecting the welding rods according to an embodiment of the present invention. FIG. 4 is a view illustrating a state of the welding rods 10 and 20 measured by the electronic pressure-sensitive paper 110 in the apparatus 100 for inspecting the welding rods according to an embodiment of the present invention, wherein (a) of FIG. 4 is a view illustrating a normal state (no wear), and (b) is a view illustrating an abnormal state (with wear).

Embodiment 2 of the present invention is different from Embodiment 1 in that it relates to an apparatus 100 for inspecting the welding rods, which is used in the method for inspecting the welding rods 10 and 20.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIGS. 2 and 3, the apparatus 100 for inspecting the welding rods according to Embodiment 2 of the present invention may largely include an electronic pressure-sensitive paper 110, a bracket 120, and a guide rail 130. The electronic pressure-sensitive paper 110 may be configured to inspect the welding rods 10 and 20 by receiving a pressure from each of the welding rods 10 and 20. The bracket 120 may be configured to fix and install the electronic pressure-sensitive paper 110. In addition, the guide rail 130 may be configured to guide the bracket 120 on which the electronic pressure-sensitive paper 110 is installed to move in a curved shape.

The electronic pressure-sensitive paper 110 may include a plurality of measurement nodes 111. Each of the measurement nodes 111 may be a minimum unit configuration that performs measurement as illustrated in FIG. 4. The plurality of measurement nodes 111 may be provided in a grid shape to perform the measurement. The measured values by the respective measurement nodes 111 may be combined to obtain an entire result value.

For this, a width d of each measurement node 111 may have a value of 0.01 mm to 0.1 mm. In addition, a pitch p between the measurement node 111 and the measurement node 111 may have a value of 0.01 mm to 0.2 mm. Here, the pitch p between the measurement node 111 and the measurement node 111 may mean a gap between the measurement node 111 and the measurement node 111. The smaller the width d and pitch p of the measurement node 111, the more precise the inspection results may be obtained.

FIG. 4 is a view illustrating a state of the welding rods 10 and 20 measured by the electronic pressure-sensitive paper 110 in the apparatus 100 for inspecting the welding rods according to an embodiment of the present invention, wherein (a) of FIG. 4 is a view illustrating a normal state (no wear), and (b) is a view illustrating an abnormal state (with wear).

Referring to FIG. 4, in the drawing (a), a pressed portion appears as a wide circle in a plan view, and thus, it may be determined that an entire surface of each of the welding rods 10 and 20 is in horizontal contact with the electronic pressure-sensitive paper 110 to apply a pressure. In addition, since the difference between a central portion, at which the highest pressure is applied, and an outer portion, at which the lowest pressure is applied, is not large, it may be determined that pressure distribution is even (see a pressure contour shown in the plan view).

In contrast, in the drawing (b), the pressed portion appears as a narrow oval in the plan view, and thus, it may be determined that only a local portion, not the entire surface of each of the welding rods 10 and 20, is in contact with the electronic pressure-sensitive paper 110 to apply a pressure. In addition, since the difference between the central portion, at which the highest pressure is applied, and the outer portion, at which the lowest pressure is applied, is large, it may be determined that there is uneven pressure distribution (biased pressure distribution) (see a pressure contour shown in the plan view).

In addition, the bracket 120 may include a bracket body 121 and a fixing member 122. Here, the bracket body 121 may be configured to insert the electronic pressure-sensitive paper 110 therein. The bracket 120 may include an upper block 121-1 and a lower block 121-2, and the electronic pressure-sensitive paper 110 may be inserted and installed between the upper block 121-1 and the lower block 121-2.

In addition, the fixing member 122 may be coupled to the bracket body 121 to fix and install the electronic pressure-sensitive paper 110. The fixing member 122 may pass through the upper block 121-1 to press the electronic pressure plate 110 and may be fixedly installed so as not to move forward or backward. For example, the fixing member 122 may be a screw member.

The guide rail 130 may guide the bracket 120 to move in a curved shape, more specifically, to move in a circular shape. Thus, the bracket 120 may move along the guide rail 130 to a position of 90 degrees (=3 o'clock position) ①, a position of 180 degrees (=6 o'clock position) ②, and a position of 270 degrees (=9 o'clock position) ③ based on the angle measurement reference point of the rotary welding equipment 1.

In addition, a stopper 131 for restricting movement of the bracket 120 may be installed on the guide rail 130. A position at which the bracket 120 is stopped by this stopper 131 may be an original point of the rotational movement of the bracket 120.

### Embodiment 3 - Method for manufacturing secondary battery

Embodiment 3 of the present invention relates to a method for manufacturing a secondary battery.

The contents in common with Embodiments 1 and 2 will be omitted as much as possible, and Embodiment 3 will be described focusing on differences. That is, it is obvious that if content that is not described in Embodiment 3 is needed, it may be regarded as the content of Embodiments 1 and 2.

Embodiment 3 of the present invention includes a welding process of a can for the secondary battery and a method for inspecting welding rods used in the welding process of the can for the secondary battery.

Here, the welding process of the can for the secondary battery may be the welding process of the can for the secondary battery described in the description of the foregoing Embodiment 1. That is, the welding process of the can for the secondary battery includes an initial standby process in which the welding rod is in a standby state before the can for the secondary battery is input for welding, a standby process before the welding, in which the can is input, and the welding rod is in the standby state, a welding process in which the welding rods press the can and an electrode tab that is an object to be welded to the can to weld the can to the electrode tab, a standby stage after the welding, in which the welding rod returns to the standby state again after the welding process, and a transfer process in which the can moves to the next process.

In addition, the method for inspecting the welding rod may be the method for inspecting the welding rod according to Embodiment 1 described above. This is a method for inspecting the welding rod to inspect the welding rods used in the welding process of the can for the secondary battery as described above.

In addition, Embodiment 3 of the present invention is characterized in that, in the method for manufacturing the secondary battery, the method for inspecting the welding rod is performed once whenever the welding process of the can for the secondary battery is performed n times. Here, n means a natural number greater than or equal to 2. For example, n may be a number such as 10, 100, 1000, 10000, etc. If the welding process of the can for the secondary battery is performed n times, the welding rod may be worn out or have a problem, and thus, the welding rod may be inspected once using the method for inspecting the welding rod to determine whether the welding rod is good or defective.

If the defective result is derived through this determination, an alarm such as warning may be given, and then, a process of replacing the welding rod may be performed. After replacing the welding rod in this manner, the welding process of the can for the secondary battery may proceed again.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Rotary welding equipment
10: Upper welding rod
20: Lower welding rod
100: Apparatus for inspecting welding rod
110: Electronic pressure-sensitive paper
111: Measurement nod
120: Bracket
121: Bracket body
122: Fixing member
130: Guide rail
131: Stopper
d: Width of measurement nod
p: Pitch (gap between measurement nodes)
①: Position of 90 degrees (= 3 o'clock position)
②: Position of 180 degrees (= 6 o'clock position)
③: Position of 270 degrees (= 9 o'clock position)

## Claims

1. A welding rod inspecting method for inspecting a welding rod used in a welding process of a can for a secondary battery, which comprises: an initial standby process in which the welding rod is in standby state before the can for the secondary battery is input for welding; a standby process before the welding, in which the can is input, and the welding rod is in the standby state; a welding process of pressing the can and an electrode tab that is an object to be welded to the can using the welding rod to perform the welding; a standby process after the welding, in which the welding rod returns to the standby state again after the welding process; and a transfer process in which the can moves to the next process, the method comprising:
an electronic pressure-sensitive paper input process of inputting an electronic pressure-sensitive paper instead of the can in the standby process before the welding;
a pressing process in which the welding rod presses the electronic pressure-sensitive paper inserted instead of the can and the electrode tab in the welding process;
an inspection process of inspecting at least one of a pressure or a surface state of the welding rod through the pressing of the electronic pressure-sensitive paper; and
a collection process of collecting the electronic pressure-sensitive paper in the transfer process.

2. The welding rod inspecting method of claim 1, wherein the welding process of the can for the secondary battery is performed by rotary welding equipment that rotates in a circular manner, and
the electronic pressure-sensitive paper performs a necessary process while moving in a curved shape along a curved guide rail.

3. The welding rod inspecting method of claim 2, wherein, based on an angle measurement reference point of the rotary welding equipment, the standby process before the welding is performed at a position of 90 degrees (3 o'clock position), the welding process is performed at a position of 180 degrees (6 o'clock position), and the transfer step is performed at a position of 270 degrees (9 o'clock position),
wherein the electronic pressure-sensitive paper input process is performed at the position of 90 degrees, the pressing process is performed at the position of 180 degrees, and the collection process is performed at the position of 270 degrees.

4. The welding rod inspecting method of claim 3, wherein the electronic pressure-sensitive paper moves along the curved guide rail to the position of 90 degrees (3 o'clock position), the position of 180 degrees (6 o'clock position), and the position of 270 degrees (9 o'clock position).

5. The welding rod inspecting method of claim 1, wherein the welding rod comprises an upper welding rod and a lower welding rod,
wherein, in the pressing process, the electronic pressure-sensitive paper is pressed from upper and lower sides by the upper welding rod and the lower welding rod.

6. The welding rod inspecting method of claim 1, wherein the welding is resistance welding or ultrasonic welding.

7. The welding rod inspecting method of claim 1, wherein the electronic pressure-sensitive paper comprises a plurality of measurement nodes.

8. The welding rod inspecting method of claim 7, wherein each of the measurement nodes has a width of 0.01 mm to 0.1 mm.

9. The welding rod inspecting method of claim 7 or 8, wherein a pitch between the measurement nodes has a value of 0.01 mm to 0.2 mm.

10. The welding rod inspecting method of claim 7, wherein the inspection process comprises:
a measurement process of measuring a surface pressure state of the electronic pressure-sensitive paper;
an area setting process of setting a pressure measurement range within measured pressure distribution;
a pressure calculation process of calculating a pressure value by adding pressures of the plurality of measurement nodes within a set area; and
a determination process of determining whether the pressure value calculated within the set area satisfies a set reference pressure to determine whether it is acceptable or not based on the result.

11. The welding rod inspecting method of claim 7, wherein the inspection process comprises:
a measurement process of measuring a surface pressure state of the electronic pressure-sensitive paper;
an area setting process of setting a pressure measurement range within measured pressure distribution;
a pressed-shape analysis process of analyzing a pressed shape formed by the electronic pressure-sensitive paper within the range; and
a determination process of determining whether the pressed shape satisfies a reference pressed-shape to determine whether it is acceptable or not based on the result.

12. The welding rod inspecting method of claim 7, wherein the inspection process comprises:
a measurement process of measuring a surface pressure state of the electronic pressure-sensitive paper;
an area setting process of setting a pressure measurement range within measured pressure distribution;
a pressure calculation process of calculating a pressure value by adding pressures of the plurality of measurement nodes within a set area;
a pressed-shape analysis process of analyzing a pressed shape formed by the electronic pressure-sensitive paper; and
a determination process of determining whether the pressure value calculated within the set area satisfies a set reference pressure and whether the pressed shape satisfies the reference pressed-shape to determine whether it is acceptable or not based on the results.

13. The welding rod inspecting method of any one of claims 10 to 12, further comprising an equipment alarm process of transmitting pass/fail determination data determined in the determination process to the equipment to determine whether to stop or start the equipment.

14. The welding rod inspecting method of claim 1, further comprising, before the pressing process, a pre-pressing process in which the welding rod presses the electronic pressure-sensitive paper at lower pressing force than a pressure for the welding in the welding process,
wherein, in the pressing process, the welding rod presses the electronic pressure-sensitive paper at the pressure for the welding in the welding process.

15. An welding rod inspecting apparatus for inspecting a welding rod used in a welding process of a can for a secondary battery, which comprises: an initial standby process in which the welding rod is in standby state before the can for the secondary battery is input for welding; a standby process before the welding, in which the can is input, and the welding rod is in the standby state; a welding process of pressing the can and an electrode tab that is an object to be welded to the can using the welding rod to perform the welding; a standby process after the welding, in which the welding rod returns to the standby state again after the welding process; and a transfer process in which the can moves to the next process, the apparatus comprising:
an electronic pressure-sensitive paper configured to inspect the welding rod by receiving a pressure applied to the welding rod;
a bracket on which the electronic pressure-sensitive paper is fixedly installed; and
a curved guide rail configured to guide the bracket on which the electronic pressure-sensitive paper is installed to move in a curved shape.

16. The welding rod inspecting apparatus of claim 15, wherein the welding process of the can for the secondary battery is performed by rotary welding equipment that rotates in a circular shape,
wherein, based on an angle measurement reference point of the rotary welding equipment, the bracket moves along the curved guide rail to positions of 90 degrees, 180 degrees, and 270 degrees.

17. The welding rod inspecting apparatus of claim 15, wherein the bracket comprises:
a bracket body into which the electronic pressure-sensitive paper is inserted; and
a fixing member coupled to the bracket body to fix and install the electronic pressure-sensitive paper.

18. The welding rod inspecting apparatus of claim 15, wherein a stopper is installed on the guide rail to restrict the movement of the bracket.

19. A method for manufacturing a secondary battery, the method comprising:
a welding process of a can for a secondary battery, the welding process comprising: an initial standby process in which the welding rod is in standby state before the can for the secondary battery is input for welding; a standby process before the welding, in which the can is input, and the welding rod is in the standby state; a welding process of pressing the can and an electrode tab that is an object to be welded to the can using the welding rod to perform the welding; a standby process after the welding, in which the welding rod returns to the standby state again after the welding process; and a transfer process in which the can moves to the next process; and
the method for inspecting the welding rod of claim 1, which inspects the welding rod used in the welding process of the can for the secondary battery,
wherein the method for inspecting the welding rod is performed once whenever the welding process of the can for the secondary battery is performed n times.
(where n is a natural number greater than or equal to 2)
